# EUROPEAN PATENT SPECIFICATION

(11) **EP 1 619 815 B1**
(45) Date of publication and mention of the grant of the patent: **24.12.2008**
(21) Application number: 05013171.3
(22) Date of filing: 17.06.2005
(51) Int. Cl.: H04J 14/02, H04J 3/16, H04L 12/56, H04Q 11/00

(54) **Broadcast multiplexer and demultiplexer in an integrated communication system**
Broadcastmultiplexer und -demultiplexer in einem integrierten Kommunikationssystem
Multiplexeur et démultiplexeur de diffusion dans un système intégré de communication

(30) Priority: 22.07.2004 KR 2004057281
(43) Date of publication of application: 25.01.2006
(73) Proprietor: SAMSUNG ELECTRONICS CO., LTD., Suwon-si, Gyeonggi-do (KR)
(72) Inventor: Cho, Jae-Hun SAMSUNG ELECTRONICS CO. LTD., Suwon-si Gyeonggi-do (KR); Oh, Yun-Je SAMSUNG ELECTRONICS CO. LTD., Suwon-si Gyeonggi-do (KR); Koh, Jun-Ho SAMSUNG ELECTRONICS CO. LTD., Suwon-si Gyeonggi-do (KR); Lee, Ki-Cheol SAMSUNG ELECTRONICS CO. LTD., Suwon-si Gyeonggi-do (KR)
(74) Representative: Grünecker, Kinkeldey, Stockmair & Schwanhäusser Anwaltssozietät

(56) References cited:
- US-A1- 2004 133 920
- PATENT ABSTRACTS OF JAPAN vol. 2000, no. 21, 3 August 2001 (2001-08-03) & JP 2001 119361 A (AICHI ELECTRONIC CO LTD), 27 April 2001 (2001-04-27)

## Description

The present invention relates to a Passive Optical Network (PON) using Wavelength Division Multiplexing (WDM).

Many broadcast and communication service subscribers currently use data communication services such as Internet. Typically the data rates for such services are several tens of Kbps (bits per second) to several tens of Mbps through xDSL, a cable modem, a dial-up modem, metro-Ethemet, etc. They also use broadcasting services such as cable broadcasting through a coaxial cable, satellite broadcasting through a satellite, terrestrial broadcasting, etc.

Data rates of about 100 Mbps are required to effectively provide subscribers with services such as high-capacity image information, Video on Demand (VoD), and high-quality digital broadcasts. However, the prior art has many limitations in accommodating such data in terms of its capacity and speed. This increases the need to implement an optical network using optical communication. PON technology has been proposed and developed as the most economic way to implement the optical network.

The PON is classified mainly into an Asynchronous Transfer Mode (ATM)-PON, an Ethernet-PON, and a WDM-PON according to its implementation methods.

Among them, the ATM-PON and Ethernet PON have problems in that they have no transparency about the speed of data to be provided to subscribers. Further they use an Optical Line Terminal (OLT), which requires complicated Media Access Control (MAC) technologies because it uses the same wavelength in upstream transmission. The ATM-PON and Ethernet PON also have difficulties in accommodating digital broadcasts.

On the other hand, the WDM-PON has no limitation on the speed of data that can be provided to the subscribers. Also, it does not require the complicated MAC technology since it uses different wavelengths in upstream and downstream transmissions. It is also easy for the WDM-PON to accommodate digital broadcasting services. Thus, there is a need for the WDM-PON to be developed for the provision of broadcast/communication-integrated services.

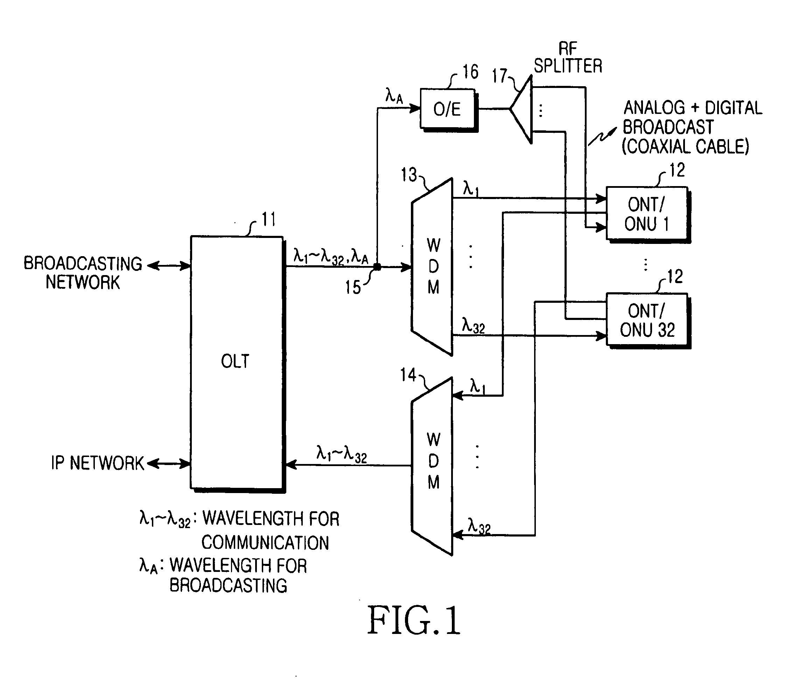

Fig. 1 shows the configuration of one conventional WDM-PON that can integrate broadcast and communication. As shown, the WDM-PON includes an OLT (Optical Line Terminal) 11, ONT/ONUs (Optical Network Terminal/Optical Network Units) 12, an optical splitter 15, a photoelectric (or optical-to-electrical) converter (O/E) 16, an RF (Radio Frequency) splitter 17, a WDM demultiplexer 13, and a WDM multiplexer 14. The OLT 11 is connected to a broadcasting network for broadcasting services and an IP (Internet Protocol) network for communication services. The OLT 11 receives broadcast signals from the broadcasting network and communication signals from the IP network, and transmits the received signals as optical signals after photoelectric conversion. In addition, the OLT 11 transfers communication signals, received from service subscribers, to the IP network. The ONT/ONUs 12 are devices on the user side for transferring the broadcast and communication signals, received from the OLT 11, to service users and transferring communication signals from the service users to the OLT 11. The optical splitter 15 splits the broadcast and communication signals from the OLT 11 into a broadcast signal λ_{A} and communication signals λ₁ to λ₃₂. The photoelectric converter 16 photoelectrically converts the broadcast signal λ_{A} split through the optical splitter 15. The RF splitter 17 distributes the converted electric broadcast signal to each of the ONT/ONUs 12. The WDM demultiplexer 13 WDM-demultiplexes the communication signals λ₁ to λ₃₂ from the OLT 11, and transfers them to the ONT/ONUs 12. The WDM multiplexer 14 WDM-multiplexes the communication signals λ₁ to λ₃₂ from the ONT/ONUs 12, and transfers them to the OLT 11.

A conventional WDM-PON operates in the following manner. The WDM-PON uses λ₁ to λ₃₂ as wavelength channels for communication, and uses λ_{A} as a wavelength channel for broadcasting.

In the conventional WDM-PON shown in Fig. 1, a broadcast signal of λ_{A} in downstream transmission is optically split through the optical splitter 15 in a front end of the WDM demultiplexer 13. Then, it is photoelectrically converted in the photoelectric converter (O/E) 16. After the converted signal is separated into respective broadcast signals for service users through the RF splitter 17, they are transmitted to the respective service users through a coaxial cable.

On the other hand, communication signals of λ₁ to λ₃₂ are transmitted to the respective service users after being demultiplexed in the wavelength demultiplexer 13 on a wavelength-by-wavelength basis.

In this conventional WDM-PON, broadcast and communication signals are not integrated and transmitted through one wavelength. Instead, analog and digital broadcast signals are integrated and transmitted through one wavelength λ_{A}. Communication signals are transmitted to subscribers through different wavelengths λ₁ to λ₃₂, respectively. That is, the conventional WDM-PON cannot integrate broadcast and communication signals into a single signal to provide broadcast and communication services.

In the conventional WDM-PON shown in Fig. 1, the optically-split broadcast signal λ_{A} is photoelectrically converted, and its analog and digital broadcast signals are transmitted through a cable network. The cable network has been installed to provide the conventional broadcasting services defined in bands of up to around 550MHz. However, existing cable networks cannot accommodate analog/digital broadcasts. This is because the domestic digital cable broadcasting standard was established to have a band around 850 MHz for carrying a broadcast signal including analog and digital broadcasts.

The conventional WDM-PON of Fig. 1 thus has a problem in that the accommodation of analog/digital broadcasts requires replacement of a lead-in coaxial cable in each subscriber with a coaxial cable of an extended band. Alternatively, it requires installation of a new extension coaxial cable with the existing coaxial cable being retained.

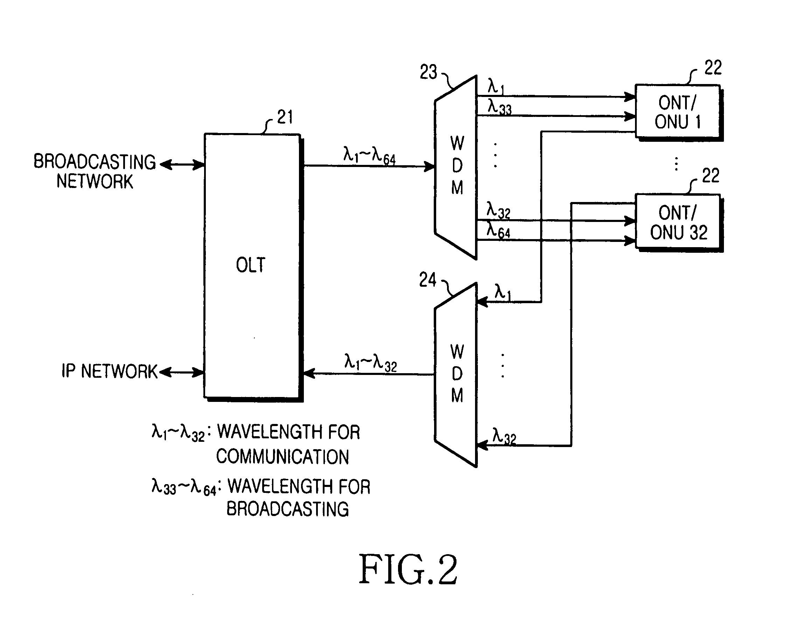

Fig. 2 shows the configuration of another conventional WDM-PON that can integrate broadcast and communication. As shown, the WDM-PON includes an OLT 21, ONT/ONUs 22, a WDM demultiplexer 23, and a WDM multiplexer 24. The OLT 21 is connected to a broadcasting network for broadcasting services and an IP network for communication services. The OLT 21 receives broadcast signals from the broadcasting network and communication signals from the IP network, and transmits the received signals as optical signals after photoelectric conversion. The OLT 21 also transfers communication signals, received from service subscribers, to the IP network. The ONT/ONUs 22 are devices on the user side for transferring the broadcast and communication signals, received from the OLT 21, to service users, and transferring communication signals from the service users to the OLT 21. The WDM demultiplexer 23 WDM-demultiplexes both the communication signals λ₁ to λ₃₂ and the broadcast signals λ₃₃ to λ₆₄, and transfers them to the ONT/ONUs 22. The WDM multiplexer 24 WDM-multiplexes the communication signals λ₁ to λ₃₂ from the ONT/ONUs 22, and transfers them to the OLT 21.

The conventional WDM-PON of Fig. 2 can provide high-capacity data communication and broadcasting services because a wavelength for broadcasting and a wavelength for communication are provided individually to each subscriber. However, as with the prior art of Fig. 1, the WDM-PON of Fig. 2 does not suggest a technology for integrating and transmitting broadcast and communication signals. In addition, the conventional WDM-PON of Fig. 2 must include twice as many optical transmitters as the conventional WDM-PON of Fig. 1. Further, each subscriber must use two optical receivers in order to receive both the wavelength signals for communication and broadcasting. This increases the cost of the WDM-PON system, imposing a burden on the subscribers. The number of wavelengths used in the WDM-PON coincides with the number of subscribers that can be handled by the WDM-PON. Thus, the number of subscribers, which can be handled by the WDM-PON, is cut in half, compared to the prior art of Fig. 1, because each subscriber uses two wavelengths.

To overcome the above problems, an application (Serial No. 2003-16373) has been filed in the Korean Intellectual Property Office, which suggests a PON (Passive Optical Network) wherein signals for digital broadcasting and communication services are integrated and transmitted using WDM (Wavelength Division Multiplexing).

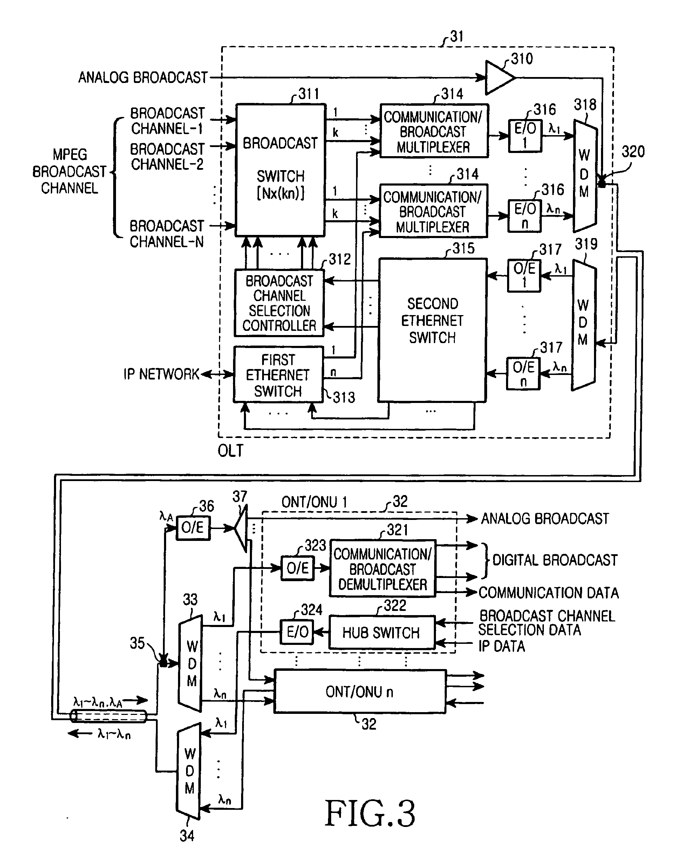

Fig. 3 shows the configuration of a WDM-PON capable of integrating broadcast and communication according to Korean application No. 2003-16373. As shown, the WDM-PON includes an OLT 31, ONT/ONUs 32, a WDM demultiplexer 33, and a WDM multiplexer 34. The OLT 31 is connected to a digital broadcasting network for broadcasting services, (which is also referred to as a "broadcasting network" in the following description), and an IP network for communication services. The OLT 31 receives digital broadcast signals from the broadcasting network and communication signals from the IP network. It transmits the received broadcast and communication signals as a single optical signal after photoelectric conversion. The OLT 31 transfers communication signals, received from service users, to the IP network. The ONT/ONUs 32 are devices on the user side for transferring the digital broadcast and communication signals, received from the OLT 31, to the service users, and transferring communication signals from the service users to the OLT 31. The WDM demultiplexer 33 WDM-demultiplexes the digital broadcast and communication signals λ₁ to λₙ, and transfers them to the ONT/ONUs 32. The WDM multiplexer 34 WDM-multiplexes communication signals λ₁ to λₙ from the ONT/ONUs 32, and transfers them to the OLT 31.

For analog broadcast transmission, the OLT 31 includes an optical amplifier 310 for amplifying an analog broadcast signal, and an optical coupler 320 for combining the analog broadcast signal with digital broadcast and communication signals. The WDM-PON further includes an optical splitter 35, a photoelectric converter 36, and an Radio Frequency (RF) splitter 37. The optical splitter 35 splits the broadcast and communication signals from the OLT 31 into an analog broadcast signal of λ_{A} and digital broadcast and communication signals of λ₁ to λ₃₂. The photoelectric converter 36 photoelectrically converts the analog broadcast signal λ_{A}, split by the optical splitter 35, into an electric analog broadcast signal. The RF splitter 37 distributes the electric analog broadcast signal to each of the ONT/ONUs 32.

In more detail, the OLT 31 includes a broadcast switch 311, a broadcast channel controller 312, a first Ethernet switch 313, a communication/broadcast multiplexer 314, a second Ethernet switch 315, an optical transmitter 316, an optical receiver 317, a WDM multiplexer 318, and a WDM demultiplexer 319. The broadcast switch 311 switches Motion Picture Experts Group (MPEG) broadcast data of multiple channels. The broadcast channel controller 312 selects a broadcast channel at the request of a service user. The first Ethernet switch 313 switches the communication data to the higher-level IP network or to the communication/broadcast multiplexer 314 for its transmission to the ONT/ONU 32. The communication/broadcast multiplexer 314 multiplexes the communication data and the digital broadcast data. The second Ethernet switch 315 switches communication data from the service user and channel information of a digital broadcast channel desired by the service user, while separating the communication data from the channel information. The optical transmitter 316 electro-optically converts the multiplexed communication/broadcast data. The optical receiver 317 receives the communication data from the service user, which is transmitted from the ONT/ONU 32, and photoelectrically converts the received communication data. The WDM multiplexer 318 multiplexes wavelength signals, which are optically modulated. The WDM demultiplexer 319 separates the optical signals, transmitted from the ONT/ONUs 32, from each other on a wavelength-by-wavelength basis. The OLT 31 may further include an optical amplifier 310 for amplifying analog broadcast signals for analog broadcast transmission, and an optical coupler 320 for combining the analog broadcast signal with the communication and digital broadcast signals.

The ONT/ONU 32 includes an optical receiver 323, a communication/broadcast demultiplexer 321, a hub switch 322, and an optical transmitter 324. The optical receiver 323 receives communication/broadcast optical signals transmitted from the OLT 31, and photoelectrically converts them. The communication/broadcast demultiplexer 321 separates the communication and digital broadcast signals. The hub switch 322 joins together communication data from a service user and digital broadcast selection data for selecting a digital broadcast channel desired by the service user. The optical transmitter 324 electro-optically converts data to transmit it to the OLT 31.

A description will now be given of the downstream transmission operation of the WDM-PON of Fig. 3 according to Korean application No. 2003-16373. The downstream transmission indicates transmission in the direction from the OLT 31 to the ONT/ONU 32.

First, MPEG digital broadcast data transferred from an Service Operator (SO), etc., is inputted to the broadcast switch 311. Each service user specifies a TV channel that he or she desires to see. The broadcast channel selection controller 312 transfers a signal for specifying the TV channel to the broadcast switch 311 to select a digital broadcast channel desired by each service user, so that only the selected broadcast channel signal is transmitted. Taking into consideration that each service user may request a number of digital broadcast channels, the broadcast switch 311 switches up to K digital broadcast channels. In the WDM-PON of Fig. 3, the maximum number of transmittable digital broadcast channels may be set according to specifications of the WDM-PON, because a number of broadcast receivers may be equipped in a single residence.

Communication data transmitted from the higher-level IP network is switched in the first Ethernet switch 313 on a user-by-user basis. The communication data, together with the digital broadcast signals, is then inputted to the communication/broadcast multiplexer 314. The communication/broadcast multiplexer 314 multiplexes the inputted communication and broadcast data into a single channel using a multiplexing technique such as Time Division Multiplexing (TDM) and Frequency Division Multiplexing (FDM).

The communication and digital broadcast data multiplexed in the communication/broadcast multiplexer 314 are electro-optically converted in the optical transmitters 316 which have unique transmission wavelengths λ₁ to λₙ, respectively.

After being multiplexed in the WDM multiplexer 318, the optically-modulated communication/broadcast data is combined, by the optical coupler 320, with an analog broadcast optical signal of λ_{A} amplified in the optical amplifier 310.

The combined wavelength-multiplexed optical signal is transmitted through an optical cable. The analog broadcast optical signal λ_{A} is separated from the combined optical signal by an optical splitter 35 on the receiver side. The communication/broadcast-multiplexed optical signals of λ₁ to λₙ are separated from each other by the WDM demultiplexer 33 according to their wavelength, and are then photoelectrically converted by the optical receiver 323 in each ONT/ONU 32.

After the photoelectrical conversion, the communication/broadcast-multiplexed signal is demultiplexed by the communication/broadcast demultiplexer 321 into K digital broadcast channels and communication data. They are then transferred to a terminal device of the service user, such as a digital TV and a computer.

The analog broadcast optical signal split through the optical splitter 35 is photoelectrically converted in the optical receiver 36, and the converted electrical signal is split through the RF splitter 37 to be transferred to each service user.

Upstream transmission operation is performed in the following manner. The upstream transmission indicates transmission in the direction from the ONT/ONU 32 to the OLT 31.

Signals transmitted from each service user to the OLT 31 are composed mainly of IP communication data generated by a computer, etc., and a broadcast channel selection signal for viewing a desired broadcast channel. These signals are combined in the hub switch 322 in the ONT/ONU 32, and the combined signal is electro-optically converted in the optical transmitter 324 with a transmission wavelength assigned to each of the ONT/ONUs 32. The converted signal is multiplexed in the WDM multiplexer 34 with wavelength signals from the other ONT/ONUs 32.

The multiplexed WDM optical signals are transmitted to the OLT 31 through an optical cable. They are then separated from each other according to their wavelength by the WDM demultiplexer 319 in the OLT 31.

The wavelength signals separated according to their wavelength are photoelectrically converted in the optical receivers 317, and the converted electrical signals are inputted to the second Ethernet switch 315. This switch 315 switches the broadcast channel selection signal to the broadcast channel selection controller 312, and switches the IP communication data to the first Ethernet switch 313 connected to the IP network.

The signal inputted to the broadcast channel selection controller 312 is used to control the broadcast switch 311 The signal inputted to the first Ethernet switch 313 is transferred to the higher-level IP network.

A detailed configuration of the communication/broadcast multiplexer and demultiplexer 314 and 321 for integrating and separating communication and broadcast signals has not been set forth in the WDM-PON capable of integrating broadcast and communication according to Korean application No. 2003-16373. Thus, there is a need to study a configuration of the communication/broadcast multiplexer and demultiplexer 314 and 321, which enables the use of general protocols. It is also necessary to modify the WDM-PON according to Korean application No. 2003-16373 so as to be capable of providing a Triple Play Service (TPS) in which a voice communication service is provided as a service independent of broadcast/communication services. This has been generally provided in the form of Voice over IP (VoIP) packets included in an Ethernet frame transmitted for the communication service.

Document JP2001-119361 discloses a television signal multiplex transmitting method and a system therefor. In a television signal transmission system, a CATV station and a subscriber unit comprises an IEEE1394HUB providing a serial high speed interface that has a transmission speed of several hundred Mbps. Communication satellite (CS) broadcasting and ground wave broadcasting digital broadcasting signals are demodulated and base band signals are generated and transferred into time division multiplexed signals. These signals are sent to a CATV transmission line in a synchronous transfer mode of the IEEE1394HUB located in the CATV station. The IEEE1394HUB located in a subscriber unit receives these signals and sends them to each piece of equipment such as a TV, a video tape recorder or a PC. Thus, the signals to be transmitted and the signals to be received are transmitted/received by one interface. Conventionally, a CATV station needs two modulation techniques, a QPSK modulator for CS broadcasting and a QAM modulator and demodulator for ground waves. The television signal multiplexing transmission system offers the ability to receive both broadcasts with one interface. Another purpose is to form an LAN, which makes other subscribers and data communication possible using a CATV transmission line while the transmission system is applied to a CATV system and enables the reception of both the CS broadcasting and ground wave broadcasting.

The switch book titled "The Complete Guide to LAN Switching Technology" by Rich Seifert, 2000 ISBN 0-471,34586-5 from pages 520 to 544 refers to an Ethernet priority mechanism and describes that many different scheduling algorithms are possible. Each provides different behavior, with a different set of performance trade-offs. The most popular algorithms, the strict priority algorithm and the weighted fair queuing algorithm are considered. Using strict priority, the scheduler always de-queues the next frame from the highest priority non-empty queue. Strict priority interprets priority literally; higher priority queues will always be served before lower priority queues. From an implementation perspective, strict priority is the easiest policy to implement. The downside of strict priority is that, by taking the priority policy literally, it puts the burden of proper behavior on the administrator setting the priority policy and on users and applications not taking advantage of it. A strict priority policy allows a single high priority application to completely starve lower priority applications. If a high priority user offers more load than the capacity of the output port, no frames will be transmitted from the lower priority queues. In this extreme case, all frames in lower priority queues will be discarded due to exceeding the transit delay bounds of the switch. An alternative approach is to give precedence to higher priority queues, but not to the complete exclusion of the lower priority queues. This approach is called a weighted fair queuing (WFQ). A weight is assigned to each queue; higher priority queues are given greater weight than lower priority queues. The output scheduler then uses a round-robin algorithm tempered by the indicated weight. Weights are assigned relative to the proportion of the bandwidth allocated for each queue. That is, if all queues have traffic to send, the available bandwidth will be divided among them by the ratio of their weights.

US 2004/0133920 A1 refers to digital broadcast system in a passive optical network. The digital broadcast system receives digital broadcast services on a passive optical network, wherein a data separator separates a signal into an Ethernet frame received from the outside for data service and an Ethernet frame for digital broadcast service. An Ethernet switch transmits the Ethernet frame for data service to an optical network terminal, ONT, provided in the user's home according to header information of the Ethernet frame for data service. A channel request processor receives the user's channel selection request information and user identification, ID, information from the ONT. The digital broadcast processor transmits the Ethernet frame for digital broadcast service corresponding to the digital broadcast channel selected by the user, through the user's ONT by using a part of bandwidth assignment for an existing line. An optical line terminal, OLT, interfaces with user devices via a splitter and a plurality of optical network units. The splitter receives a signal from the OLT, makes a plurality of copies of the received signal, and broadcasts those copies to the plurality of ONUs. The Ethernet frame for digital broadcast service and the Ethernet frame for data service are transmitted to each of the ONUs via the same optical cable but using different frequency ranges, a process which is based on a wavelength division multiplexing, WDM, technique provided by an E-PON.

The present invention has been made in view of the above circumstances and needs.

It is the object of the present invention to provide a communication/broadcast multiplexer and demultiplexer for multiplexing and demultiplexing communication and broadcast signals using a specific transmission standard in an optical network system that integrates broadcast and communication services using a channel selection technique.

This object is solved by the subject matter of the independent claims.

Preferred embodiments are defined in the dependent claims.

It is an aspect of the present invention to provide a communication/broadcast multiplexer and demultiplexer for implementing TPS services in a WDM PON-based FTTH system.

In accordance with one aspect of the present invention, a communication/broadcast multiplexer is provided for use with digital broadcast data and communication data and a broadcast/communication-integrated system, the multiplexer comprising a broadcast data receiver, wherein the broadcast data receiver receives broadcast data on a subscriber basis in the broadcast/communication-integrated system, and transfers the broadcast data as a synchronous data frame; a communication data receiver, wherein the communication data receiver receives communication data on a subscriber basis and transfers the communication data as an asynchronous data frame; and a synchronous Ethernet framer for converting both the synchronous data frame received from the broadcast data receiver and the asynchronous data frame received from the communication data receiver into a synchronous Ethernet frame.

In accordance with another aspect of the present invention, there is provided a communication/broadcast demultiplexer for use with digital broadcast data and communication data and a broadcast/communication-integrated system, the demultiplexer comprising a synchronous Ethernet deframer for dividing a synchronous Ethernet frame received in the broadcast/communication-integrated system into broadcast data corresponding to a synchronous data frame and communication data corresponding to an asynchronous data frame,; and a broadcast data output unit for separating the broadcast data received from the synchronous Ethernet deframer into respective broadcast signals of channels, and then outputting the broadcast signals.

In accordance with a further aspect of the present invention, there is provided a communication/broadcast multiplexer for use with digital broadcast data and communication data and a broadcast/communication-integrated system, the multiplexer comprising an Ethernet Media Access Control (MAC) framer for receiving MPEG-TS signals switched on a subscriber basis through a broadcast switch in an OLT in the broadcast/communication-integrated system, and converting the MPEG-TS signals into an Ethernet MAC frame; and an Ethernet MAC switch for switching the Ethernet MAC frame for broadcasting received from the Ethernet MAC framer and an Ethernet MAC frame for communication received on a subscriber basis through an Ethernet switch in the OLT.

In accordance with another aspect of the present invention, there is provided a communication/broadcast demultiplexer for use with digital broadcast data and communication data and a broadcast/communication-integrated system, the demultiplexer comprising an Ethernet Media Access Control (MAC) switch for separating an Ethernet frame received through a photoelectric converter in a corresponding ONT in the broadcast/communication-integrated system into an Ethernet MAC frame for communication and an Ethernet MAC frame for broadcasting; and a MAC deframer for converting the separated Ethernet MAC frame for broadcasting back to MPEG-TS data.

In accordance with yet another aspect of the present invention, there is provided a communication/broadcast multiplexer for use with digital broadcast data and communication data in a broadcast/communication-integrated system, the multiplexer comprising an IEEE 1394 link layer controller (LLC) for receiving MPEG-TS signals switched on a subscriber basis in the broadcast/communication-integrated system, receiving communication data on a subscriber basis through an Ethernet switch, and converting both the MPEG-TS signals and the communication data into IEEE 1394 data; and a controller connected with the IEEE 1394 LLC to allow the IEEE 1394 LLC to convert both the MPEG-TS signals and the communication data into the IEEE 1394 data.

In accordance with a further aspect of the present invention, there is provided a communication/broadcast demultiplexer for use with digital broadcast data and communication data and a broadcast/communication-integrated system, the demultiplexer comprising an IEEE 1394 physical unit for receiving IEEE 1394 data transmitted to a corresponding optical network terminal (ONT) in the broadcast/communication-integrated system; an IEEE 1394 link layer controller (LLC) for dividing the IEEE 1394 data received through the IEEE 1394 physical unit into MPEG-TS signals and communication data; and a controller connected with the IEEE 1394 LLC to allow the IEEE 1394 LLC to divide the received IEEE 1394 data into the MPEG-TS signals and the communication data.

In accordance with another aspect of the present invention, there is provided a communication/broadcast multiplexer for use with digital broadcast data and communication data and a broadcast/communication-integrated system including a voice matching unit for voice transmission, the multiplexer comprising an IEEE 1394 link layer controller (LLC) for receiving MPEG-TS signals switched on a subscriber basis through a broadcast switch in an optical line terminal (OLT) in the broadcast/communication-integrated system, receiving a voice signal from the voice matching unit, receiving communication data on a subscriber basis through an Ethernet switch in the OLT, and converting the MPEG-TS signals, the voice signal, and the communication data into IEEE 1394 data; and a controller connected with the IEEE 1394 LLC to allow the IEEE 1394 LLC to convert the MPEG-TS signals, the voice signal, and the communication data into the IEEE 1394 data.

In accordance with yet another aspect of the present invention, there is provided a communicafion/broadcast demultiplexer for use with digital broadcast data and communication data and a broadcast/communication-integrated system, the demultiplexer comprising an IEEE 1394 physical unit for receiving IEEE 1394 data transmitted to a corresponding optical network terminal (ONT) in the broadcast/communication-integrated system; an IEEE 1394 link layer controller (LLC) for dividing the IEEE 1394 data received through the IEEE 1394 physical unit into MPEG-TS signals, a voice signal, and communication data; and a controller connected with the IEEE 1394 LLC to allow the IEEE 1394 LLC to divide the received IEEE 1394 data into the MPEG-TS signals, the voice signal, and the communication data.

The present invention will be more clearly understood from the following detailed description taken in conjunction with the accompanying drawings, in which:
Fig. 1 is a block diagram illustrating the configuration of a conventional WDM-PON capable of integrating broadcast and communication;
Fig. 2 is a block diagram illustrating the configuration of another conventional WDM-PON capable of integrating broadcast and communication;
Fig. 3 is a block diagram illustrating the configuration of a WDM-PON capable of integrating broadcast and communication according to Korean application No. 2003-16373;
Figs. 4a and 4b are block diagrams illustrating the respective configurations of a communication/broadcast multiplexer and a communication/broadcast demultiplexer according to a first embodiment of the present invention;
Fig. 5 illustrates a data structure for synchronous Ethernet according to the present invention;
Figs. 6a and 6b are block diagrams illustrating the respective configurations of a communication/broadcast multiplexer and a communication/broadcast demultiplexer according to a second embodiment of the present invention;
Figs. 7a and 7b are block diagrams illustrating the respective configurations of a communication/broadcast multiplexer and a communication/broadcast demultiplexer according to a third embodiment of the present invention;
Fig. 8 illustrates a data structure for IEEE 1394 transmission according to the present invention;
Figs. 9a and 9b are block diagrams illustrating the respective configurations of a communication/broadcast multiplexer and a communication/broadcast demultiplexer according to a fourth embodiment of the present invention, which is modified from the third embodiment to provide TPS services; and
Fig. 10 illustrates an IEEE 1394 data structure for providing TPS services according to the present invention.

Now, embodiments of the present invention will be described in detail with reference to the annexed drawings. In the drawings, the same or similar elements are denoted by the same reference numerals even though they are depicted in different drawings. For the purposes of clarity and simplicity, a detailed description of known functions and configurations incorporated herein will be omitted as it may make obscure the subject matter of the present invention.

The following description of the present invention will be given with reference to a PON (Passive Optical Network) that uses WDM (Wavelength Division Multiplexing) to integrate and transmit digital broadcasting and communication signals according to Korean application No. 2003-16373. The present invention is not limited to this PON structure, which is provided only for illustrative purposes, and may be applied to various other PON structures that enable the integration of communication and broadcast services.

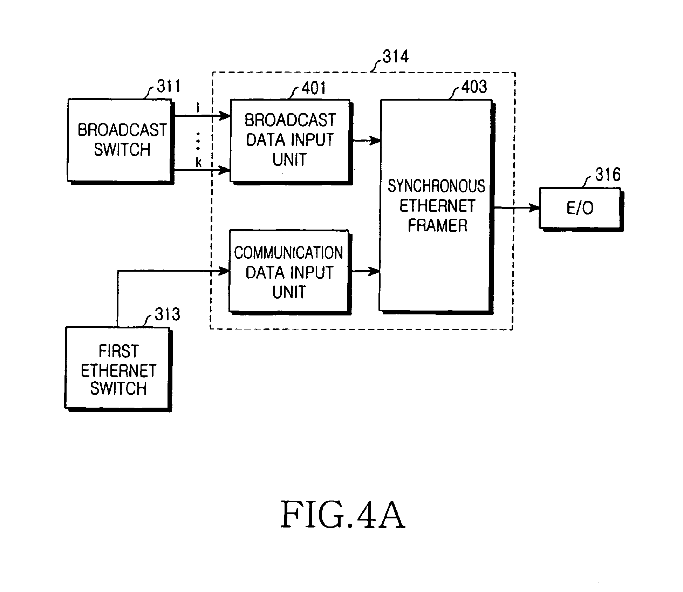

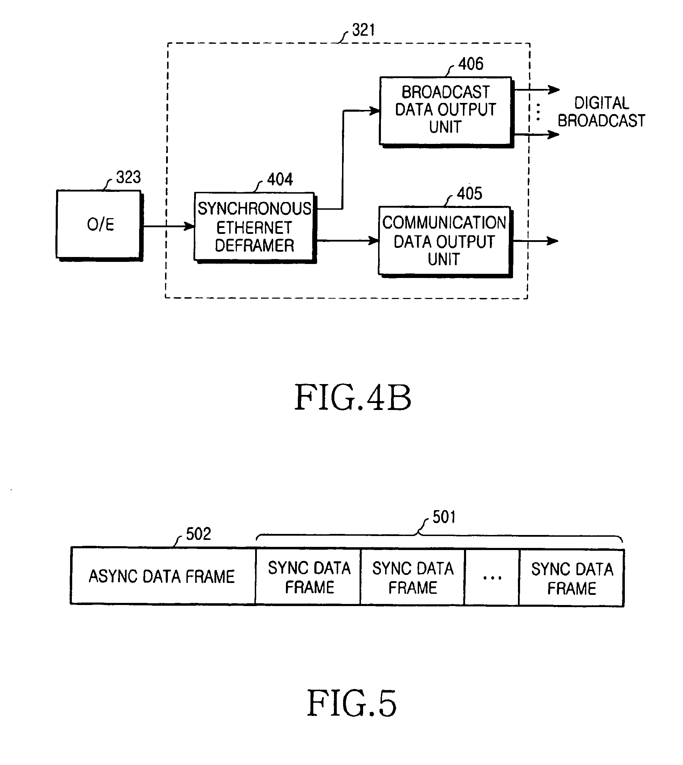

Figs. 4a and 4b are block diagrams illustrating the respective configurations of a communication/broadcast multiplexer and a communication/broadcast demultiplexer according to a first embodiment of the present invention.

The communication/broadcast multiplexer according to the first embodiment uses synchronous Ethernet for communication/broadcast multiplexing.

Fig. 5 illustrates a data structure for synchronous Ethernet. As shown in Fig. 5, synchronous Ethernet data includes an asynchronous data frame 502 and a plurality of synchronous data frames 501. According to the synchronous Ethernet, when conventional communication data including Ethernet data and control data is transmitted together with data (for example, multimedia data such as MPEG-TS) requiring real-time processing, the data requiring real-time processing is transmitted synchronously with a predetermined cycle, thereby minimizing the delay of the data requiring real-time processing. The synchronous Ethernet satisfies IEEE 802.3, making it possible to accommodate communication/broadcast services using the conventional Ethernet physical layer without alteration.

Broadcast data of K broadcast channels are framed into a number of synchronous data frames 501 having the conventional size of 830 octets. The maximum allowed number of the synchronous data frames 501 is 16. Communication data (for example, general Ethernet data) is incorporated into the asynchronous data frame 502. The synchronous and asynchronous frames 501 and 502 constitute one cycle (8kHz). These frames are synchronized at intervals of 125µs. The synchronous data frames are preferentially transmitted. This allows data transmission with the minimum broadcast service delay. The physical structure for downstream transmission from the OLT to the ONT complies with IEEE 802.3 described above, and upstream transmission from the ONT to the OLT carries only Ethernet data including control data (for example, zapping and NMS/EMS data), other than broadcast data.

As shown in Fig. 4a, the communication/broadcast multiplexer according to the first embodiment of the present invention includes a broadcast data input unit 401, a communication data input unit 402, and a synchronous Ethernet framer 403. The broadcast data input unit 401 receives broadcast data switched on a subscriber basis through a broadcast switch 311, and inputs the broadcast data, as a synchronous data frame, to the synchronous Ethernet framer 403. The communication data input unit 402 receives communication data through a first Ethernet switch 313 and inputs the communication data, as an asynchronous data frame, to the synchronous Ethernet framer 403. The synchronous Ethernet framer 403 produces a Time Division Multiplexed (TDM) synchronous Ethernet frame corresponding to the data received from the input units 401 and 402. It outputs the produced frame to an electro-optical converter (E/O) 316.

As shown in Fig. 4b, the communication/broadcast demultiplexer according to the first embodiment of the present invention includes a synchronous Ethernet deframer 404, a communication data output unit 405, and a broadcast data output unit 406. The synchronous Ethernet deframer 404 divides a synchronous Ethernet frame received through a photoelectric converter (O/E) 323 into broadcast data (i.e., synchronous data frames) and communication data (i.e., an asynchronous data frame), and outputs the broadcast data to the broadcast data output unit 406 and the communication data to the communication data output unit 405. The communication data output unit 405 outputs the communication data received from the synchronous Ethernet deframer 404. The broadcast data output unit 406 separates the broadcast data received from the synchronous Ethernet deframer 404 into the respective broadcast signals of channels, and then provides the signals to each user device.

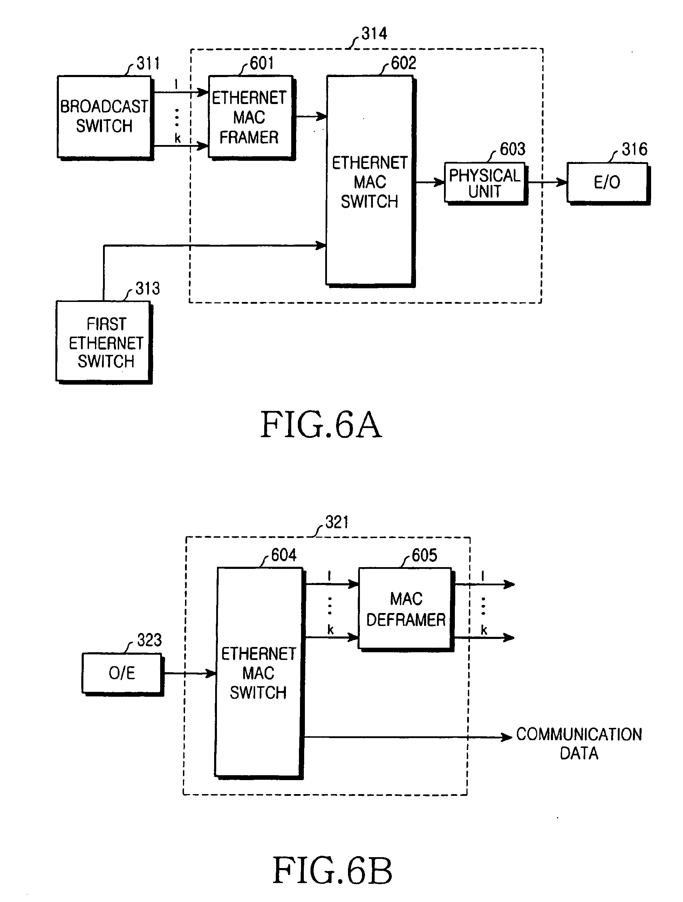

Figs. 6a and 6b are block diagrams illustrating the respective configurations of a communication/broadcast multiplexer and a communication/broadcast demultiplexer according to a second embodiment of the present invention.

The communication/broadcast multiplexer according to the second embodiment uses an Ethernet MAC framer for communication/broadcast multiplexing.

As shown in Fig. 6a, the communication/broadcast multiplexer 314 according to the second embodiment includes an Ethernet MAC framer 601, an Ethernet MAC switch 602, and an output physical unit 603. The communication/broadcast multiplexer 314 incorporates broadcast signals into an Ethernet MAC frame in the following manner. The Ethernet MAC framer 601 in the communication/broadcast multiplexer 314 receives MPEG-TS signals switched on a subscriber basis through a broadcast switch 311. It allocates source and destination addresses to each of the MPEG-TS signals, and then incorporates the MPEG-TS signals into an Ethernet MAC frame. The Ethernet MAC frame for broadcasting, output from the Ethernet MAC framer 601, is input to the Ethernet MAC switch 602 in the communication/broadcast multiplexer 314. An Ethernet MAC frame for communication received through the first Ethernet switch 313 is also input to the Ethernet MAC switch 602.

Different source addresses and different destination addresses are allocated to the MPEG-TS signals, thereby making it possible to accommodate multiple channels. That is, a number of channels for transmission are discriminated by different source addresses, and user devices are discriminated by different destination addresses.

The Ethernet MAC switch 602 receives the Ethernet MAC frame for communication from the first Ethernet switch 313 and the Ethernet MAC frame for broadcasting from the broadcast switch 311, and switches the frames to the output physical unit 603. The Ethernet MAC switch 602 preferentially switches the Ethernet MAC frame for broadcasting to the output physical unit 603. The switched data is transferred to an electro-optical converter 316, which converts the frame into an optical signal.

The communication/broadcast demultiplexer according to the second embodiment uses an Ethernet MAC deframer for communication/broadcast demultiplexing.

As shown in Fig. 6b, the communication/broadcast demultiplexer 321 according to the second embodiment includes an Ethernet MAC switch 604, and a MAC deframer 605. he communication/broadcast demultiplexer 321 demultiplexes communication/broadcast-integrated data transferred to the ONT. The Ethernet MAC switch 604 separates the communication/broadcast-integrated data received through a photoelectric converter (O/E) 323 into an Ethernet MAC frame for communication and an Ethernet MAC frame for broadcasting according to their source and destination addresses. The MAC deframer 605 converts the Ethernet MAC frame for broadcasting back to MPEG-TS data, and outputs the MPEG-TS data.

Upstream transmission from the ONT to the OLT carries only Ethernet data including NMS/EMS data and a zapping signal, other than broadcast data.

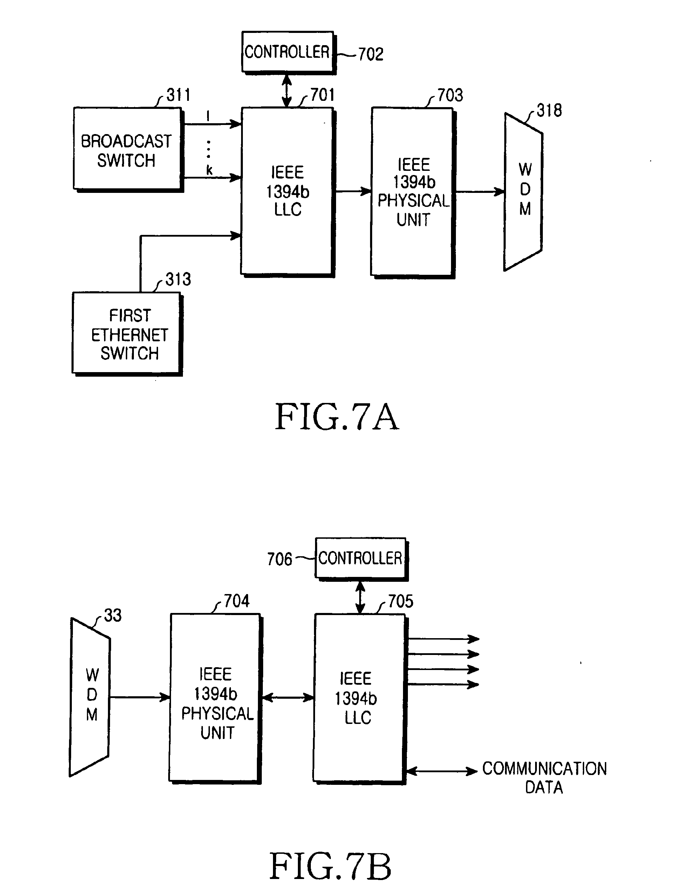

Figs. 7a and 7b are block diagrams illustrating the respective configurations of a communication/broadcast multiplexer and a communication/broadcast demultiplexer according to a third embodiment of the present invention.

The communication/broadcast multiplexer according to the third embodiment uses IEEE 1394 transmission for communication/broadcast multiplexing.

IEEE 1394a, which is one version of the IEEE 1394 used in the embodiments of the present invention, theoretically supports up to 400 Mbps. IEEE 1394b, which is another version thereof, theoretically supports up to 3.2 Gbps, and is backwards compatible.

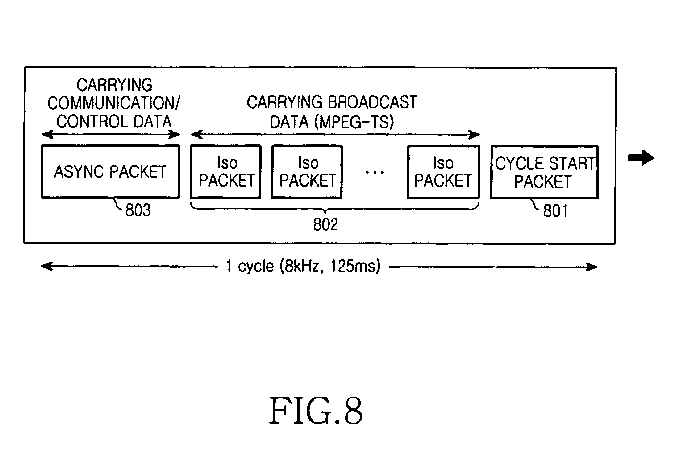

Fig. 8 illustrates a data structure for IEEE 1394 transmission. As shown in Fig. 8, an IEEE 1394 frame has a cycle of 125µs, and supports two data formats. The first is an isochronous data format 802 suitable for transmission of a broadcast MPEG-TS and the second is an asynchronous data format 803 suitable for transmission of communication data and control signals. To accommodate multiple channels for broadcasting, the present invention utilizes the fact that a number of isochronous data packets can be accommodated in the IEEE 1394 transmission cycle (125µs). That is, the IEEE 1394 frame accommodates multiple broadcast channels using a number of isochronous data packets in the IEEE 1394 transmission cycle (125µs). Theoretically, the IEEE 1394 frame can support up to 64 channels.

As shown in Fig. 7a, the communication/broadcast multiplexer using IEEE 1394 according to the third embodiment includes an IEEE 1394b Link Layer Controller (LLC) 701, an IEEE 1394b physical unit 703, and a controller 702. The communication/broadcast multiplexer converts K digital broadcast channels from a broadcast switch 311 and communication data from a first Ethernet switch 313 into an IEEE 1394 transmission frame. It also WDM-multiplexes and transmits the IEEE 1394 transmission frame to a corresponding ONT.

The communication/broadcast demultiplexer according to the third embodiment uses IEEE 1394 transmission for communication/broadcast demultiplexing.

As shown in Fig. 7b, the communication/broadcast demultiplexer provided in an ONT, which uses IEEE 1394 according to the third embodiment, includes an IEEE 1394b physical unit 704, an IEEE 1394b LLC 705, and a controller 706.

The IEEE 1394b physical unit 704 receives optical transmission data for the ONT through a WDM demultiplexer 33, and photoelectrically converts and transfers the received data to the IEEE 1394b LLC 705. Under the control of the controller 706, the IEEE 1394b LLC 705 divides the received IEEE 1394 transmission data into broadcast and communication packets, and transmits the packets.

Upstream transmission from the ONT to the OLT carries only Ethernet data including NMS/EMS data and a zapping signal, other than broadcast data.

A physical unit, which can provide IEEE 1394b standard output, among various commercial chips supporting IEEE 1394, and an IEEE 1394 LLC capable of providing a multimedia data stream interface may be used in practical implementations of the communication/broadcast multiplexer and demultiplexer supporting IEEE 1394. Here, the IEEE 1394 LLC is designed to have a predetermined number of controllable buffers and a data interface.

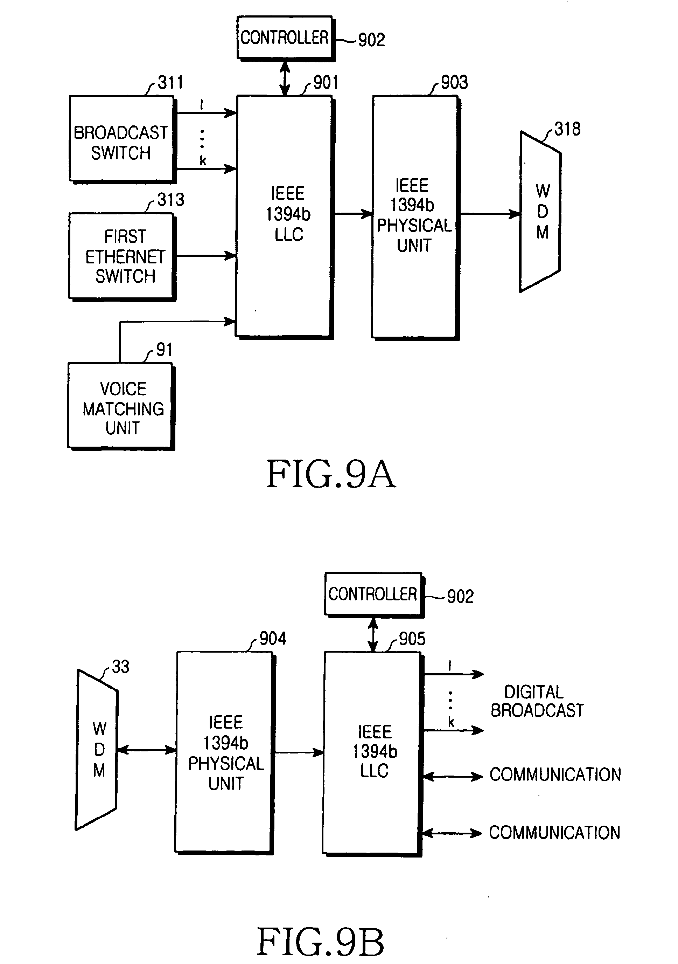

Figs. 9a and 9b are block diagrams illustrating the respective configurations of a communication/broadcast multiplexer and a communication/broadcast demultiplexer according to a fourth embodiment of the present invention. This embodiment provides TPS services.

Two typical methods are used to support TPS services. In the first method, an Ethernet frame is used to carry all three types of data, i.e., broadcast, communication and voice data. In the second method, broadcast data separated from communication data is transmitted using an independent channel, and voice data is transmitted by incorporating it into the communication data.

Since the first method transmits broadcast and voice data using an Ethernet frame, the first method requires a large amount of processing to guarantee real-time transmission and the quality of signal transmission. This requirement causes a problem in practical implementations. In particular, a priority-based method for guaranteeing the quality of transmission causes a decrease in the quality of transmission of broadcast and voice data. In this method, all broadcast, voice and communication data is accommodated in limited Ethernet resources, which causes significant problems such as bandwidth decrease and transmission quality decrease.

As described above, the second method transmits broadcast data through an independent channel, and transmits communication and voice data in an Ethernet frame. Since there is independent transmission of the broadcast data, the second method can guarantee bandwidth for communication and voice data transmission. However, a high cost is incurred for the broadcast data transmission and reception, and the Ethemet transmission of the voice data causes a problem in the real-time service.

The present invention is characterized in that the IEEE 1394 multiplexer/demultiplexer are used to provide TPS (Triple Play Service) services.

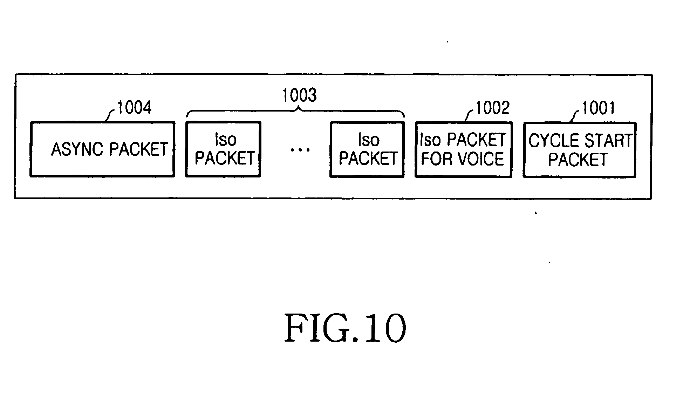

Fig. 10 illustrates an IEEE 1394 data structure for providing TPS services.

As with the IEEE 1394 frame of Fig. 8, an IEEE 1394 frame of Fig. 10 has a cycle of 125µs, and supports two data formats, i.e., isochronous and asynchronous data formats. The isochronous data format suitable for real-time multimedia data transmission gives priority consideration to transmission timing. The isochronous data is preferentially transmitted over the asynchronous data, and is allocated up to 80% of the available transmission resources The asynchronous data is allocated at least 20% thereof, and gives priority consideration to transmission quality.

Isochronous and asynchronous data can be allocated to multiple channels in a transmission cycle of 125µs. Accordingly, broadcast data is allocated to isochronous data packets 1003, and communication and control data is allocated to an asynchronous data packet 1004. Since the characteristics of voice data are similar to those of broadcast data, voice data is designed to be allocated to the isochronous data packet 1002 and transmitted over a single channel corresponding to the isochronous data packet 1002.

As shown in Fig. 9a, the communication/broadcast multiplexer for providing TPS services according to the fourth embodiment of the present invention includes an IEEE 1394b LLC (Link Layer Controller) 901, an IEEE 1394b physical unit 903, and a controller 902. The communication/broadcast multiplexer in an OLT converts K digital broadcast channels from a broadcast switch 311 and communication data from a first Ethernet switch 313 into an IEEE 1394 transmission frame. The WDM-multiplexes and transmits the IEEE 1394 transmission frame to a corresponding ONT. In this embodiment, a voice matching unit 91 for voice data transmission is additionally provided in the OLT. The IEEE 1394b LLC receives voice data from the voice matching unit 91, and multiplexes the voice data into an IEEE 1394 data frame as shown in Fig. 10. The controller 902 is connected to the IEEE 1394b LLC 901 to control the flow of broadcast data. It provides a communication data path, handles voice data transmission, and performs control signal processing such as channel zapping.

As shown in Fig. 9b, the communication/broadcast demultiplexer according to the fourth embodiment of the present invention, which is provided in an ONT, uses IEEE 1394 to provide TPS services, and includes an IEEE 1394b physical unit 904, an IEEE 1394b LLC 905, and a controller 906.

The IEEE 1394b physical unit 904 receives optical transmission data for the ONT through a WDM demultiplexer 33, and photoelectrically converts and transfers the received data to the IEEE 1394b LLC 905. Under the control of the controller 906, the IEEE 1394b LLC 905 divides the received IEEE 1394 transmission data into communication, broadcast and voice packets, and transmits the packets. The controller 902 is connected to the IEEE 1394b LLC 905. It controls the flow of broadcast data, provides a communication data path, handles voice data transmission, and performs control signal processing such as channel zapping.

Upstream transmission from the ONT to the OLT carries only Ethernet data including NMS/EMS data and a zapping signal, other than broadcast data.

A physical unit can provide IEEE 1394b standard output, among various commercial chips supporting IEEE 1394, and an IEEE 1394 LLC capable of providing a multimedia data stream interface. The physical unit may be used in practical implementations of the communication/broadcast multiplexer and demultiplexer supporting IEEE 1394. Here, the IEEE 1394 LLC is designed to have a predetermined number of controllable buffers and a data interface.

Each of the IEEE 1394b physical units 703, 704, 903 and 904 can provide an optical interface in the IEEE 1394b transmission as shown in Figs. 7 to 10. Each physical unit can transfer data directly to a WDM-PON light source without requiring a photoelectric converter or an electro-optical converter.

In the IEEE 1394b transmission as shown in Figs. 7 to 10, multiple channels for broadcasting can be accommodated. The present invention utilizes the fact that a number of isochronous channels can be accommodated in an IEEE 1394 transmission cycle of 125µs. For example, where the system is designed for a maximum transmission capacity of 400Mbps, if asynchronous transmission resources of 100Mbps are allocated to transmission of communication data, isochronous transmission resources may have a transmission capacity of up to 300Mbps. The resources may be allocated to transmission of isochronous data packets of various lengths.

For example, in the IEEE 1394b transmission as shown in Figs. 7 to 10, it is possible to support up to 6 broadcast channels of 50Mbps. It is also possible to transmit up to 11 broadcast channels of 27Mbps to one subscriber. An actual bandwidth capacity required for transmission of voice data is in the range of 2 to 3Mbps, which is smaller than that required for transmission of broadcast and communication data.

As apparent from the above description, a communication/broadcast multiplexer and demultiplexer according to the present invention has the following features and advantages. In an optical network system for integrating broadcast and communication services using a channel selection technique, the communication/broadcast multiplexer and demultiplexer multiplex and demultiplex communication/broadcast data according to a generalized physical transmission standard, thereby making it possible to implement a low-price WDM-PON system.

The communication/broadcast multiplexer and demultiplexer use an IEEE 1394 standard transmission protocol to implement TPS services, thereby making it possible to guarantee both the quality of broadcast and voice signals and the bandwidth for communication signals.

Although the preferred embodiments of the present invention have been disclosed for illustrative purposes, those skilled in the art will appreciate that various modifications, additions and substitutions are possible, without departing from the scope of the invention as disclosed in the accompanying claims. Accordingly, the scope of the present invention should not be limited to the above embodiments, but should rather defined by the accompanying claims.

## Claims

1. An optical line terminal for use with digital broadcast data and communication data in a bcoadcast/communication-integrated system, the optical line terminal (31) **characterized by** :
at least one communication/broadcast multiplexer (314) including:
an IEEE 1394 link layer controller (901) for receiving MPEG-TS signals switched on a subscriber basis in the broadcast/communication-integrated system, receiving communication data on a subscriber basis through an Ethernet switch (313), and converting both the MPEG-TS signals and the communication data into IEEE 1394 data; and
a controller (902) connected with the IEEE 1394 link layer controller (901) to allow the IEEE 1394 link layer controller (901) to convert both the MPEG-TS signals and the communication data into the IEEE 1394 data,
wherein the IEEE 1394 link layer controller (901) is adapted to convert said MPEG-TS signals and said communication data into the IEEE 1394 data by allocating the MPEG-TS signals to IEEE 1394 isochronous data packets and by allocating the communication data to an IEEE 1394 asynchronous data packet,
wherein said isochronous data packets are transmitted with priority over asynchronous data packets"
and by means for receiving broadcast channel selection information selected by each subscriber connected to said optical line terminal (31),
wherein said optical line terminal (31) is adapted for switching broadcast data to said at least one multiplexer (314) for transmitting only a selected broadcast channel signal selected according to broadcast channel selection information received from a respective one of each of said subscribers,
wherein the multiplexer (314) includes a voice matching unit (91) connected to said IEEE 1394 link layer controller (901) for performing voice data transmission, wherein the IEEE 1394 link layer controller (901) is adapted for converting said MPEG-TS signals, said communication data, and also said voice signal into IEEE 1394 data.

2. The optical line terminal according to claim 1, further comprising a broadcast switch (311) for switching the MPEG-TS signals.

3. The optical line terminal according to claim 1, wherein the received MPEG-TS signals are switched on a subscriber basis through a broadcast switch (311) in the optical line terminal (31) in the broadcast/communication-integrated system.

4. The optical line terminal according to claim 3, wherein the IEEE 1394 link layer controller (901) is adapted for receiving a voice signal from the voice matching unit (91).

5. The optical line terminal according to claim 4, wherein the Ethernet switch (313) through which said communication data is received is located in the optical line terminal.

6. The optical line terminal according to claim 1, wherein said controller (902) connected with the IEEE 1394 link layer controller (901) further allows the IEEE 1394 link layer controller (901) to convert said MPEG-TS signals, said communication data, and the voice signal into the IEEE 1394 data.

7. The optical line terminal according to claim 1 or 6, wherein the at least one communication/broadcast multiplexer (314) further includes an IEEE 1394 physical unit (903) for transferring the IEEE 1394 data received from the IEEE 1394 link layer controller (901).

8. The optical line terminal according to claim 6, wherein the IEEE 1394 link layer controller (901) is adapted to convert the MPEG-TS signals, the voice signal, and the communication data into the IEEE 1394 data by allocating the MPEG-TS signals and the voice signal to IEEE 1394 isochronous data packets and by allocating the communication data to an IEEE 1394 asynchronous data packet.

9. The optical line terminal according to claim 1 or 6, wherein the IEEE 1394 physical unit (901) is adapted to transmit an optical signal corresponding to the IEEE 1394 data received from the IEEE 1394 link layer controller (901).

10. A broadcast/communication-integrated system having an optical line terminal (31) connected to at least one optical network terminal (32) for use with digital broadcast data and communication data, the system comprising:
the optical line terminal (31) of one of claims 1 to 9; and
the at least one optical network terminal (32), wherein the at least one optical network terminal comprises:
a communication/broadcast demultiplexer (321) including:
an IEEE 1394 physical unit (904) for receiving IEEE 1394 data transmitted to a corresponding one of the at least one optical network terminal (32) in the broadcast/communication-integrated system;
an IEEE 1394 link layer controller (905) for dividing the IEEE 1394 data received through the IEEE 1394 physical unit (904) into MPEG-TS signals and communication data; and
a controller (902) connected with the IEEE 1394 link layer controller (905) to allow the IEEE 1394 link layer controller to divide the received IEEE 1394 data into the MPEG-TS signals and the communication data,
and means (322) for receiving broadcast channel selection information from a subscriber and for transferring the channel selection information to the optical line terminal (31),
wherein said IEEE 1394 link layer controller (905) of the communication/broadcast demultiplexer (321) is further adapted for dividing said IEEE 1394 data into said MPEG-TS signals, communication data, and also a voice signal.

11. The system according to claim 10, wherein said controller (902) connected with the 1394 link layer controller (905) further allows the IEEE 1394 link layer controller (905) to divide said received IEEE 1394 data into said MPEG-TS signals, said communication data, and also the voice signal.

12. The system according to claim 10, wherein the IEEE 1394 link layer controller (905) is adapted to divide the received IEEE 1394 data into the MPEG-TS signals and the communication data by associating IEEE 1394 isochronous data packets in the received IEEE 1394 data with the MPEG-TS signals switched on a subscriber basis, and to associate an IEEE 1394 asynchronous data packet therein with the communication data received on a subscriber basis.

13. The system according to claim 11, adapted for outputting the MPEG-TS signals, the voice signal, and the communication data to a subscriber device.

14. The system according to claim 11, wherein the IEEE 1394 link layer controller (905) is adapted to divide the received IEEE 1394 data into the MPEG-TS signals, the voice signal, and the communication data by associating IEEE 1394 isochronous data packets in the received IEEE 1394 data with the voice signal and MPEG-TS signals switched on a subscriber basis, and to associate an IEEE 1394 asynchronous data packet therein with the communication data received on a subscriber basis.

15. The system according to claim 10 or 11, wherein the IEEE 1394 physical unit (904) is adapted to convert an optical signal containing the IEEE 1394 data received by the optical network terminal into an electrical signal and to transfer the electrical signal to the IEEE 1394 link layer controller (905).

## Patentansprüche

1. OLT-Vorrichtung (optical line terminal) zum Einsatz mit digitalen Übertragungsdaten und Kommunikationsdaten in einem integrierten Übertragungs/Kommunikations-System, wobei die OLT-Vorrichtung (31) **gekennzeichnet ist durch:**
wenigstens eine Kommunikations/Übertragungs-Multiplexer-Einrichtung (314), die enthält:
eine IEEE-1394-Sicherungsschicht-Steuereinrichtung (901) zum Empfangen von MPEG-TS-Signalen, die auf einer Abonnenten-Basis in dem integrierten Übertragungs/ Kommunikations-System geschaltet werden, zum Empfangen von Kommunikationsdaten auf einer Abonnenten-Basis über einen Ethemet-Switch (313) und zum Umwandeln sowohl der MPEG-TS-Signale als auch der Kommunikationsdaten in IEEE-1394-Daten; und
eine Steuereinrichtung (902), die mit der IEEE-1394-Sicherungsschicht-Steuereinrichtung (901) verbunden ist, damit die IEEE-1394-Sicherungsschicht-Steuereinrichtung (901) sowohl die MPEG-TS-Signale als auch die Kommunikationsdaten in die IEEE-1394-Daten umwandeln kann,
wobei die IEEE-1394-Sicherungsschicht-Steuereinrichtung (901) so eingerichtet ist, dass sie die MPEG-TS-Signale und die Kommunikationsdaten in die IEEE-1394-Daten umwandelt, indem sie die MPEG-TS-Signale IEEE-1394-Isochron-Datenpaketen zuordnet und die Kommunikationsdaten einem IEEE-1394-Asynchron-Datenpaket zuordnet;
wobei die Isochron-Datenpakete mit Priorität gegenüber Asynchron-Datenpaketen gesendet werden,
und **durch** eine Einrichtung zum Empfangen von Übertragungskanal-Auswählinformationen, die von jedem Abonnenten ausgewählt werden, der mit der OLT-Vorrichtung (31) verbunden ist,
wobei die OLT-Vorrichtung (31) so eingerichtet ist, dass sie Übertragungsdaten zu der wenigstens einen Multiplexer-Einrichtung (314) schaltet, um nur das Signal des ausgewählten Übertragungskanals zu senden, das entsprechend Übertragungskanal-Auswählinformationen ausgewählt wird, die von einem jeweiligen der Abonnenten empfangen werden,
wobei die Multiplexer-Einrichtung (314) eine Sprach-Abgleicheinheit (91) enthält, die mit der IEEE-1394-Sicherungsschicht-Steuereinrichtung (901) verbunden ist, um Sprachdaten zu senden, und die IEEE-1394-Sicherungsschicht-Steuereinrichtung (901) so eingerichtet ist, dass sie die MPEG-TS-Signale, die Kommunikationsdaten und auch das Sprachsignal in IEEE-1394-Daten umwandelt.

2. OLT-Vorrichtung nach Anspruch 1, die des Weiteren einen Übertragungs-Switch (311) zum Schalten der MPEG-TS-Signale umfasst.

3. OLT-Vorrichtung nach Anspruch 1, wobei die empfangenen MPEG-TS-Signale auf einer Abonnenten-Basis über einen Übertragungs-Switch (311) in der OLT-Vorrichtung (31) in dem integrierten Übertragungs/Kommunikations-System geschaltet werden.

4. OLT-Vorrichtung nach Anspruch 3, wobei die IEEE-1394-Sicherungsschicht-Steuereinrichtung (901) so eingerichtet ist, dass sie ein Sprachsignal von der Sprachabgleicheinheit (91) empfängt.

5. OLT-Vorrichtung nach Anspruch 4, wobei der Ethemet-Switch (313), über den die Übertragungsdaten empfangen werden, in der OLT-Vorrichtung angeordnet ist.

6. OLT-Vorrichtung nach Anspruch 1, wobei die Steuereinrichtung (902), die mit der IEEE-1394-Sicherungsschicht-Steuereinrichtung (901) verbunden ist, der IEEE-1394-Sicherungsschicht-Steuereinrichtung (901) des Weiteren gestattet, die MPEG-TS-Signale, die Kommunikationsdaten und das Sprachsignal in die IEEE-1394-Daten umzuwandeln.

7. OLT-Vorrichtung nach Anspruch 1 oder 6, wobei die wenigstens eine Kommunikations/ Übertragungs-Multiplexer-Einrichtung (314) des Weiteren eine physikalische IEEE-1394-Einheit (903) zum Übertragen der von der IEEE-1394-Sicherungsschicht-Steuereinrichtung (901) empfangenen IEEE-1394-Daten enthält.

8. OLT-Vorrichtung nach Anspruch 6, wobei die IEEE-1394-Sicherungsschicht-Steuereinrichtung (901) so eingerichtet ist, dass sie die MPEG-TS-Signale, das Sprachsignal und die Kommunikationsdaten in die IEEE-1394-Daten umwandelt, indem sie die MPEG-TS-Signale und das Sprachsignal IEEE-1394-Isochron-Datenpaketen zuordnet und die Kommunikationsdaten einem IEEE-1394-Asynchron-Datenpaket zuordnet.

9. OLT-Vorrichtung nach Anspruch 1 oder 6, wobei die physikalische IEEE-1394-Einheit (901) so eingerichtet ist, dass sie ein optisches Signal sendet, das den von der IEEE-1394-Sicherungsschicht-Steuereinrichtung (901) empfangenen IEEE-1394-Daten entspricht.

10. Integriertes Übertragungs-/Kommunikationssystem, das eine OLT-Vorrichtung (31) aufweist, die mit wenigstens einer ONT-Vorrichtung (optical network terminal) (32) zum Einsatz mit digitalen Übertragungsdaten und Kommunikationsdaten verbunden ist, wobei das System umfasst:
die OLT-Vorrichtung (31) nach einem der Ansprüche 1 bis 9; und
die wenigstens eine ONT-Vorrichtung (32), wobei die wenigstens eine ONT-Vorrichtung umfasst:
eine Kommunikations-/Übertragungs-Demultiplexer-Einrichtung (321), die enthält:
eine physikalische IEEE-1394-Einheit (904) zum Empfangen von IEEE-1394-Daten, die zu einer entsprechenden der wenigstens einen ONT-Vorrichtung (32) in dem integrierten Übertragungs-/Kommunikations-System gesendet werden;
eine IEEE-1394-Sicherungsschicht-Steuereinrichtung (905), die die über die physikalische IEEE-1394-Einheit (904) empfangenen IEEE-1394-Daten in MPEG-TS-Signale und Kommunikationsdaten teilt; und
eine Steuereinrichtung (902), die mit der IEEE-1394-Sicherungsschicht-Steuereinrichtung (905) verbunden ist, um der IEEE-1394-Sicherungsschicht-Steuereinrichtung (905) zu gestatten, die empfangenen IEEE-1394-Daten in die MPEG-TS-Signale und die Kommunikationsdaten zu teilen,
und eine Einrichtung (322) zum Empfangen von Übertragungskanal-Auswahlinformationen von einem Abonnenten sowie zum Weiterleiten der Kanalauswahl-Informationen zu der OLT-Vorrichtung (31),
wobei die IEEE-1394-Sicherungsschicht-Steuereinrichtung (905) der Kommunikatiions/Übertragungs-Demultiplexer-Einrichtung (321) des Weiteren so eingerichtet ist,
dass sie die IEEE-1394-Daten in die MPEG-TS-Signale, Kommunikationsdaten und ebenfalls ein Sprachsignal teilt.

11. System nach Anspruch 10, wobei die Steuereinrichtung (902), die mit der 1394-Sicherungsschicht-Steuereinrichtung (905) verbunden ist, der IEEE-1394-Sicherungsschicht-Steuereinrichtung (905) des Weiteren gestattet, die empfangenen IEEE-1394-Daten in die MPEG-TS-Signale, die Kommunikationsdaten und auch das Sprachsignal zu teilen.

12. System nach Anspruch 10, wobei die IEEE-1394-Sicherungsschicht-Steuereinrichtung (905) so eingerichtet ist, dass sie die empfangenen IEEE-1394-Daten in die MPEG-TS-Signale und die Kommunikationsdaten teilt, indem sie die IEEE-1394-Isochron-Datenpakete in den empfangenen IEEE-1394-Daten mit den MPEG-TS-Signalen verknüpft, die auf einer Abonnentenbasis geschaltet werden, und ein IEEE-1394-Asynchron-Datenpaket darin mit den auf einer Abonnenten-Basis empfangenen Kommunikationsdaten verknüpft.

13. System nach Anspruch 11, das zum Ausgeben der MPEG-TS-Signale, des Sprachsignals und der Kommunikationsdaten an ein Abonnentengerät eingerichtet ist.

14. System nach Anspruch 11, wobei die IEEE-1394-Sicherungsschicht-Steuereinrichtung (905) so eingerichtet ist, dass sie die empfangenen IEEE-1394-Daten in die MPEG-TS-Signale, das Sprachsignal und die Kommunikationsdaten teilt, indem sie IEEE-1394-Isochron-Datenpakete in den empfangenen IEEE-1394-Daten mit dem Sprachsignal und MPEG-TS-Signalen verknüpft, die auf einer Abonnenten-Basis geschaltet werden, und ein IEEE-1394-Asynchron-Datenpaket darin mit den auf einer Abonnenten-Basis empfangenen Kommunikationsdaten verknüpft.

15. System nach Anspruch 10 oder 11, wobei die physikalische IEEE-1394-Einheit (904) so eingerichtet ist, dass sie ein optisches Signal, das die durch die ONT-Vorrichtung empfangenen IEEE-1394-Daten enthält, in ein elektrisches Signal umwandelt und das elektrische Signal zu der IEEE-1394-Sicherungsschicht-Steuereinrichtung (905) weiterleitet.

## Revendications

1. Terminal de ligne optique destiné à être utilisé avec des données numériques de radiodiffusion et des données de communication dans un système intégré de radiodiffusion/communication, le terminal de ligne optique (31) étant **caractérisé par** :
au moins un multiplexeur (314) de communication/radiodiffusion comprenant :
une unité (901) de commande de couche de liaison IEEE 1394 destinée à recevoir des signaux MPEG-TS commutés sur une base par abonné dans le système intégré de radiodiffusion/communication, à recevoir des données de communication sur une base par abonné en passant par un commutateur Ethernet (313), et à convertir à la fois les signaux MPEG-TS et les données de communication en données IEEE 1394 ; et
une unité de commande (902) connectée à l'unité (901) de commande de couche de liaison IEEE 1394 pour permettre à l'unité de commande (901) de la couche de liaison IEEE 1394 de convertir à la fois les signaux MPEG-TS et les données de communication en données IEEE 1394,
dans lequel l'unité (901) de commande de couche de liaison IEEE 1394 est conçue pour convertir lesdits signaux MPEG-TS et lesdites données de communication en les données IEEE 1394 en allouant les signaux MPEG-TS à des paquets de données isochrones IEEE 1394 et en allouant les données de communication à un paquet de données asynchrones IEEE 1394,
dans lequel lesdits paquets de données isochrones sont transmis avec une priorité sur les paquets de données asynchrones,
et par des moyens destinés à recevoir une information de sélection de canal de radiodiffusion sélectionnée par chaque abonné connecté audit terminal (31) de ligne optique,
dans lequel ledit terminal (31) de ligne optique est conçu pour commuter des données de radiodiffusion vers ledit, au moins un, multiplexeur (314) pour transmettre uniquement un signal de canal de radiodiffusion sélectionné qui est sélectionné en fonction d'une information de sélection de canal de radiodiffusion reçue de l'un, respectif, de chacun desdits abonnés,
dans lequel le multiplexeur (314) comprend une unité (91) d'adaptation de voix connectée à ladite unité (901) de commande de couche de liaison IEEE 1394 pour effectuer une transmission de données vocales, dans lequel l'unité (901) de commande de couche de liaison IEEE 1394 est conçue pour convertir lesdits signaux MPEG-TS, lesdites données de communication et également ledit signal vocal en données IEEE 1394.

2. Terminal de ligne optique selon la revendication 1, comportant en outre un commutateur de radiodiffusion (311) destiné à commuter les signaux MPEG-TS.

3. Terminal de ligne optique selon la revendication 1, dans lequel les signaux MPEG-TS reçus sont commutés sur une base par abonné en passant par un commutateur de radiodiffusion (311) dans le terminal (31) de ligne optique dans le système intégré de radiodiffusion/communication.

4. Terminal de ligne optique selon la revendication 3, dans lequel l'unité (901) de commande de la couche de liaison IEEE 1394 est conçue pour recevoir un signal vocal provenant de l'unité (91) d'adaptation de voix.

5. Terminal de ligne optique selon la revendication 4, dans lequel le commutateur Ethernet (313) par l'intermédiaire duquel lesdites données de communication sont reçues est placé dans le terminal de ligne optique.

6. Terminal de ligne optique selon la revendication 1, dans lequel ladite unité de commande (902) connectée à l'unité (901) de commande de couche de liaison IEEE 1394 permet en outre à l'unité (901) de commande de la couche de liaison IEEE 1394 de convertir lesdits signaux MPEG-TS, lesdites données de communication et le signal vocal en les données IEEE 1394.

7. Terminal de ligne optique selon la revendication 1 ou 6, dans lequel le, au moins un, multiplexeur (314) de communication/radiodiffusion comprend en outre une unité physique IEEE 1394 (903) destinée à transférer les données IEEE 1394 reçues de l'unité (901) de commande de la couche de liaison IEEE 1394.

8. Terminal de ligne optique selon la revendication 6, dans lequel l'unité (901) de commande de la couche de liaison IEEE 1394 est conçue pour convertir les signaux MPEG-TS, le signal vocal et les données de communication en données IEEE 1394 en allouant les signaux MPEG-TS et le signal vocal à des paquets de données isochrones IEEE 1394 et en allouant les données de communication à un paquet de données asynchrones IEEE 1394.

9. Terminal de ligne optique selon la revendication 1 ou 6, dans lequel l'unité physique IEEE 1394 (901) est conçue pour transmettre un signal optique correspondant aux données IEEE 1394 reçues de l'unité (901) de commande de la couche de liaison IEEE 1394.

10. Système intégré de radiodiffusion/communication comportant un terminal de ligne optique (31) connecté à au moins un terminal (32) de réseau optique pour une utilisation avec des données numériques de radiodiffusion et des données de communication, le système comportant :
le terminal (31) de ligne optique selon l'une des revendications 1 à 9 ; et
le, au moins un, terminal (32) de réseau optique, dans lequel le, au moins, terminal de réseau optique comporte :
un démultiplexeur (321) de communication/ radiodiffusion comprenant :
une unité physique IEEE 1394 (904) destinée à recevoir des données IEEE 1394 transmises à l'un, correspondant, du, au moins un, terminal (32) de réseau optique dans le système intégré de radiodiffusion/ communication ;
une unité (905) de commande de couche de liaison IEEE 1394 destinée à diviser les données IEEE 1394 reçues par l'intermédiaire de l'unité physique IEEE 1394 (904) en signaux MPEG-TS et en données de communication ; et
une unité de commande (902) connectée à l'unité (905) de commande de la couche de liaison IEEE 1394 pour permettre à l'unité de commande de la couche de liaison IEEE 1394 de diviser les données IEEE 1394 reçues en les signaux MPEG-TS et les données de communication,
et un moyen (322) destiné à recevoir une information de sélection de canal de radiodiffusion provenant d'un abonné et à transférer l'information de sélection de canal au terminal (31) de ligne optique,
dans lequel ladite unité (905) de commande de la couche de liaison IEEE 1394 du démultiplexeur (321) de communication/radiodiffusion est en outre conçue pour diviser lesdites données IEEE 1394 en lesdits signaux MPEG-TS, lesdites données de communication et également un signal vocal.

11. Système selon la revendication 10, dans lequel ladite unité de commande (902) connectée à l'unité (905) de commande de la couche de liaison 1394 permet en outre à l'unité (905) de commande de la couche de liaison IEEE 1394 de diviser lesdites données IEEE 1394 reçues en lesdits signaux MPEG-TS, lesdites données de communication et aussi le signal vocal.

12. Système selon la revendication 10, dans lequel l'unité (905) de commande de la couche de liaison IEEE 1394 est conçue pour diviser les données IEEE 1394 reçues en les signaux MPEG-TS et les données de communication en associant des paquets de données isochrones IEEE 1394 dans les données IEEE 1394 reçues avec les signaux MPEG-TS commutés sur une base par abonné, et pour associer un paquet de données asynchrones IEEE 1394 qu'elles contiennent avec les données de communication reçues sur une base par abonné.

13. Système selon la revendication 11, conçu pour délivrer en sortie les signaux MPEG-TS, le signal vocal et les données de communication à un dispositif d'abonné.

14. Système selon la revendication 11, dans lequel l'unité (905) de commande de la couche de liaison IEEE 1394 est conçue pour diviser les données IEEE 1394 reçues en les signaux MPEG-TS, le signal vocal et les données de communication en associant des paquets de données isochrones IEEE 1394 se trouvant dans les données IEEE 1394 reçues avec le signal vocal et des signaux MPEG-TS commutés sur une base par abonné, et pour associer un paquet de données asynchrones IEEE 1394 s'y trouvant avec les données de communication reçues sur une base par abonné.

15. Système selon la revendication 10 ou 11, dans lequel l'unité physique IEEE 1394 (904) est conçue pour convertir un signal optique contenant les données IEEE 1394 reçues par le terminal de réseau optique en un signal électrique et pour transférer le signal électrique à l_{'}unité (905) de commande de la couche de liaison IEEE 1394.
